# EUROPÄISCHE PATENTSCHRIFT

(11) **EP 4 513 254 B1**
(45) Veröffentlichungstag und Bekanntmachung des Hinweises auf die Patenterteilung: **11.11.2026**
(21) Anmeldenummer: 23192289.9
(22) Anmeldetag: 19.08.2023
(51) Int. Cl.: G02C 5/12, G02C 11/04

(54) **LICHT EMITTIERENDES NASENPAD**
LIGHT EMITTING NOSEPAD
LUMIÈRE ÉMISSIVE PLAQUETTE DE NEZ

(43) Veröffentlichungstag der Anmeldung: 26.02.2025
(73) Patentinhaber: iControl automotive GmbH, 82031 Grünwald (DE)
(72) Erfinder: FERLEMANN, Frieder, 69120 Heidelberg (DE); SANDROCK, Dirk, 69259 Wilhelmsfeld (DE)
(74) Vertreter: Koelle, Alexander

(56) Entgegenhaltungen:
- EP-B1- 3 200 875
- WO-A1-2017/036090
- US-A1- 2009 156 886
- US-A1- 2021 181 534
- US-B1- 9 568 746

## Beschreibung

### Technisches Gebiet

Die vorliegende Erfindung betrifft ein Licht emittierendes Nasenpad, insbesondere ein Licht emittierendes Nasenpad, welches auf eine Nase eines Nutzers aufsetzbar ist, und welches eine Steuerung aufweist, welche ausgebildet ist, an einem ersten und zweiten Bügelelement des Nasenpads angeordnete LEDs zu aktivieren und Lichtsignale in den Sichtbereich des linken und rechten Auges zu leuchten.

### Stand der Technik

Es ist aus dem Stand der Technik bekannt, dass Brillen Beleuchtungselemente, wie LEDs und Displays, aufweisen können, durch welche dem Nutzer der Brille visuelle Informationen direkt in den Sichtbereich der Augen übertragen werden können. Entsprechende Brillen (auch "smart glasses" genannt) umfassen beispielsweise NEDs ("Near Eye Devices") und HUDs ("Head Up Displays").

Bei entsprechenden herkömmlichen Brillen sind die entsprechenden Beleuchtungselemente, sowie die entsprechende Steuerung und elektrische Energieversorgung, in der Brille integriert, so dass die gesamte Brille, etwa die Gläser, der Ohrenbügel und/oder die Nasenpads an einen spezifischen Nutzer individuell angepasst werden muss. Eine Übertragung entsprechender herkömmlichen Brillen mit Beleuchtungselementen zwischen verschiedenen Nutzern mit unterschiedlichen Kopfdimensionen und Augenabständen ist oftmals nicht oder nur mit einem großen Aufwand möglich.

Zudem bieten entsprechende herkömmlichen Brillen mit Beleuchtungselementen meist keine Korrekturgläser an, so dass eine Anpassung der Brille an verschiedene Nutzer mit unterschiedlichen Sehstärken oftmals nicht möglich ist.

In der Druckschrift US 10,729,371 B2 ist eine Brille mit einem Nasenpad offenbart, wobei über einen Verbindungsarm ein Gerät mit einem Sensor im Blickbereich des Nutzers positioniert wird. Das Gerät weist jedoch keine LEDs auf.

In der Druckschrift US 7,869,128 B2 ist eine Brille mit einem Nasenpad offenbart, wobei am Rahmen der Brille und nicht am Nasenpad ein "Head-Mounted-Display" angeordnet ist.

In der Druckschrift US 11,409,128 B2 ist ein Nasenpad einer Brille offenbart, wobei das Nasenpad über einen Verbindungsadapter mit einem elektronischen Bauteil verbindbar ist. An dem Nasenpad sind keine LED-aufweisenden Bügel angeordnet.

In der Druckschrift US 8,934,175 B2 ist eine Brille mit einem Nasenpad offenbart, wobei auch hier ein "Head-Up-Display" an dem Gehäuse der Brille und nicht an dem Nasenpad angeordnet ist.

In der Druckschrift US 2020/0353251 A1 ist eine Brille mit Elektrodenstreifen offenbart, welche den Rand der Brille umlaufen.

Die Druckschrift EP 3 200 875 B1 offenbart eine Vorrichtung zur Signalübermittlung zum Auge, wobei die Vorrichtung ein stabförmiges Gehäuse umfasst, welches mittels einer Halteklemme an der Nase des Anwenders befestigt ist, wobei am Ende des stabförmigen Gehäuses jeweils ein Lichtemitter angeordnet ist, welcher ausgebildet ist, Licht in das jeweils zugeordnete Auge des Anwenders abzustrahlen.

Die Druckschrift US 2021/0181534 A1 offenbart eine als Brille ausgebildete Vorrichtung zur automatischen Augen-fokussierten Therapie, wobei die Brille ein Brillengestellt mit Bügel, einer Nasenauflage, sowie LEDs aufweist.

Die Druckschrift WO 2017/036090 A1 offenbart eine als Brille ausgebildete intelligente Schlafvorrichtung, welche LED-Module zur Beleuchtung der Retina des Nutzers aufweist.

Die Druckschrift US 2009/156886 A1 offenbart eine Vorrichtung zur Augenfokussierten Therapie, wobei die als Brille ausgebildete Vorrichtung ein Gehäuse aufweist, welches zwei Gläser aufweist, wobei an dem Gehäuse eine Nasenauflage und ein paar Arme angeordnet sind, und wobei an dem Gehäuse ein Lichtrahmen mit einer Vielzahl von Lichtern angeordnet ist.

Die Druckschrift US 9 568 746 B1 offenbart ein Nasenpad einer Brille, welches mit den Gläsern einer Brille verbunden ist, und welches ausgebildet ist, responsive Signale an den Nutzer der Brille auszugeben.

Es besteht seit Langem ein Bedarf Brillen mit entsprechenden Beleuchtungselementen zur Projektion von Lichtsignalen in den Sichtbereich eines Nutzers bereitzustellen, welche flexibel und ohne spezielle Anpassung von unterschiedlichen Nutzern verwendet werden können.

### Offenlegung der Erfindung

Die vorliegende Erfindung stellt sich zur Aufgabe, eine Projektionsmöglichkeit von Lichtsignalen in die Augen eines Nutzers bereitzustellen, welche flexibel an unterschiedliche Nutzer angepasst werden kann.

Die Aufgabe der Erfindung wird durch das Licht emittierende Nasenpad nach Anspruch 1, durch das System gemäß dem Anspruch 17, und durch die Brillenanordnung gemäß dem Anspruch 18 gelöst. Die abhängigen Ansprüche beanspruchen bevorzugte Ausführungsformen der Erfindung.

Gemäß einem Aspekt der vorliegenden Erfindung wird die genannte Aufgabe gelöst durch ein Licht emittierendes Nasenpad, welches auf eine Nase eines Nutzers aufsetzbar ist, wobei das Licht emittierende Nasenpad umfasst: ein Padelement, welches an der Nase des Nutzers anlegbar ist; ein Halteelement, welches mit dem Padelement verbunden ist, wobei das Halteelement ausgebildet ist, eine Mehrzahl von unterschiedlichen Monoscheiben einer Brille, insbesondere einer Sonnen- oder Schutzbrille, zu halten; ein erstes Bügelelement, welches mit dem Halteelement verbunden ist, wobei das erste Bügelelement eine Mehrzahl von nebeneinander angeordneten LEDs aufweist, und wobei sich das erste Bügelelement in einen Sichtbereich des linken Auges des Nutzers erstreckt; ein zweites Bügelelement, welches mit dem Halteelement verbunden ist, wobei das zweite Bügelelement eine Mehrzahl von nebeneinander angeordneten LEDs aufweist, und wobei sich das zweite Bügelelement in einen Sichtbereich des rechten Auges des Nutzers erstreckt; und eine Steuerung, welche an dem Halteelement angeordnet ist, und welche mit den LEDs des ersten und zweiten Bügelelements steuerungstechnisch verbunden ist; wobei die Steuerung ausgebildet ist, die LEDs des ersten Bügelelements zu aktivieren, und Lichtsignale in den Sichtbereich des linken Auges des Nutzers zu leuchten und wobei die Steuerung ausgebildet ist, die LEDs des zweiten Bügelelements zu aktivieren, und Lichtsignale in den Sichtbereich des rechten Auges des Nutzers zu leuchten.

Dadurch wird der technische Vorteil erreicht, dass durch die Anordnung der beiden Bügelelemente und der Steuerung an dem Licht emittierenden Nasenpad für die Lichtprojektion in die Augen des Nutzers keine Brille benötigt wird, sondern das Nasenpad alleine diese Funktionalität bereitstellen kann.

Dies bewirkt zusammen mit dem Halteelement, welches ausgebildet ist, eine Mehrzahl von unterschiedlichen Monoscheiben einer Brille, insbesondere einer Sonnen- oder Schutzbrille, zu halten, dass auf das Licht emittierende Nasenpad unterschiedlichste Monoscheiben aufgesetzt werden können, so dass sich vielseitige Anwendungsmöglichkeiten ergeben.

Beispielsweise können für unterschiedlich groß dimensionierte Köpfe von unterschiedlichen Nutzern unterschiedlich groß dimensionierte Monoscheiben verwendet werden. Auch können je nach Sehstärke des jeweiligen Nutzers auch unterschiedliche Einzelscheiben mit unterschiedlichen Brillenstärken zur Korrektur einer Fehlsichtigkeit des Nutzers verwendet werden. Wird das Nasenpad in einem Bereich mit Nutzergefährdung eingesetzt, beispielsweise bei der Metallbearbeitung oder in der chemischen Industrie, können spezielle widerstandsfähige Schutzscheiben als Monoscheiben verwendet werden. Soll ein Sonnenschutz bereitgestellt werden, können getönte Monoscheiben verwendet werden.

Durch die Verwendung des Licht emittierenden Nasenpads ist eine Anordnung auf verschiedenen Kopf-, und Nasendimensionen bzw. Augenabständen von unterschiedlichen Nutzern möglich und es bedarf keiner individuellen mechanischen Justierung, bzw. Anpassung.

Entsprechende mit dem Licht emittierenden Nasenpad verbindbare Monoscheiben sind offensichtlich einstückig ausgebildet und können insbesondere Ohrenbügel aufweisen, mittels denen eine wirksame Befestigung hinter den Ohren des Nutzers möglich ist.

Insbesondere können entsprechende mit dem Licht emittierenden Nasenpad verbindbare Monoscheiben auch einen Scheibenrahmen aufweisen, welcher die Monoscheibe zumindest abschnittsweise umläuft, wobei der Scheibenrahmen insbesondere an einer Oberseite der Monoscheibe angeordnet ist.

Ein insbesondere mögliches Einrasten der jeweiligen Monoscheibe in das Halteelement des Licht emittierenden Nasenpads realisiert eine stabile Verbindung zwischen dem Licht emittierenden Nasenpad und der Monoscheibe, welche zum Auswechseln der Monoscheibe auch wieder lösbar ist.

Sofern im Rahmen der vorliegenden Erfindung auf "links" und "rechts", bzw. "oben und unten" verwiesen wird, bezieht sich die entsprechende Positionsangabe auf die Blickrichtung des Nutzers, welcher das Licht emittierende Nasenpad trägt. Somit erstreckt sich beispielsweise das erste Bügelelement in der Blickrichtung des Nutzers, welcher das Licht emittierende Nasenpad trägt, von dem Halteelement nach links in den Sichtbereich des linken Auges des Nutzers.

Die an dem Halteelement angeordneten Bügelelemente mit den LEDs erstrecken sich von dem Halteelement im Bereich der Nase in den Sichtbereich des jeweiligen linken und rechten Auges des Nutzers, so dass nach entsprechender Aktivierung durch die Steuerung das durch die LEDs emittierte Licht wirksam in dem Sichtbereich des entsprechenden linken und rechten Auges des Nutzers sichtbar wird.

Insbesondere weisen das erste Bügelelement und/oder das zweite Bügelelement eine gebogene Form auf, wodurch eine vorteilhafte Führung des entsprechenden Bügelelements am Rand des Sichtbereichs des entsprechenden Auges des Nutzers erreicht wird, so dass das jeweilige Bügelelement den entsprechenden Sichtbereich nicht mittig verdeckt.

In einer Ausführungsform sind die LEDs ausgebildet, Licht mit zumindest zwei unterschiedlichen Farben zu emittieren.

Dadurch wird der technische Vorteil erreicht, dass durch die unterschiedlichen Farben dem Nutzer entsprechende Informationen visuell optimiert dargestellt werden können. Beispielsweise kann mit rotem Licht durch entsprechende LEDs auf eine drohende Gefahr hingewiesen werden, während bei dem Leuchten von grünem Licht durch entsprechende LEDs eine dezentere Licht-Emittierung ermöglicht wird.

In einer Ausführungsform sind die Steuerung und insbesondere auch eine elektrische Energieversorgung des Licht emittierenden Nasenpads an dem Halteelement lösbar befestigt, wobei die Steuerung und insbesondere die elektrische Energieversorgung, in eine Aufnahmeöffnung des Halteelements lösbar eingeführt sind.

Dadurch wird der technische Vorteil erreicht, dass durch die lösbare Befestigung der Steuerung und insbesondere auch der elektrischen Energieversorgung bei einem Defekt, bzw. einem Batteriewechsel, eine einfache Demontage ermöglicht wird. Durch die insbesondere Verwendung einer Aufnahmeöffnung in dem Halteelement kann zumindest ein Teil der Steuerung und insbesondere auch der elektrischen Energieversorgung in dem Halteelement geschützt aufgenommen werden.

Insbesondere umfasst das Licht emittierende Nasenpad ein Steuerungsgehäuse in welchem die Steuerung aufgenommen ist und/oder ein Energieversorgungsgehäuse in welchem die elektrische Energieversorgung aufgenommen ist, wobei hierbei insbesondere das Steuerungsgehäuse und insbesondere auch die elektrische Energieversorgung an dem Halteelement lösbar befestigt sind.

In einer Ausführungsform weist das Padelement einen ersten Padelementbereich auf, welcher an einen linken Nasenflügel eines Nutzers anlegbar ist, weist das Padelement einen zweiten Padelementbereich auf, welcher an einen rechten Nasenflügel eines Nutzers anlegbar ist, und weist das Padelement einen Padelementsteg auf, welcher den ersten und zweiten Padelementbereich verbindet, und wobei der Padelementsteg an einem Nasenbein des Nutzers anlegbar ist, wobei das Halteelement durch den Padelementsteg, insbesondere zusätzlich auch durch den ersten Padelementbereich und/oder durch den zweiten Padelementbereich, mit dem Padelement verbunden ist.

Dadurch wird der technische Vorteil erreicht, dass durch die ersten und zweiten Padelementbereiche eine wirksame Stabilisierung des Nasenpads am linken und rechten Nasenflügel erreicht wird, und dass durch den Padelementsteg eine wirksame Anlage des Nasenpads an dem Nasenbein erreicht wird, so dass das Nasenpad auf eine ergonomische Weise an der Nase des Nutzers befestigt werden kann. Durch die Verbindung des Padelementstegs mit dem Halteelement wird eine stabile Befestigung des Padelements mit dem Halteelement erreicht, welche durch eine zusätzliche Verbindung mittels des ersten Padelementbereichs und/oder mittels des zweiten Padelementbereichs weiter ergänzt werden kann.

Insbesondere ist das Padelement, insbesondere der Padelementsteg, insbesondere zusätzlich auch durch den ersten Padelementbereich und/oder durch den zweiten Padelementbereich, lösbar mit dem Halteelement verbunden.

Erfindungsgemäß weist das Halteelement eine als Scheibenaufnahmeelement ausgebildete Nut auf, in welchem die Monoscheibe lösbar aufgenommen ist, wobei die Monoscheibe durch eine Rasteinrichtung mit dem Scheibenaufnahmeelement des Halteelements verbunden ist.

Dadurch wird der technische Vorteil erreicht, dass eine wirksame Positionierung der Monoscheibe an dem Halteelement des Nasenpads erreicht wird.

In einer Ausführungsform weist das Halteelement ein Steuerungsgehäuse der Steuerung auf, welches an einer dem Padelement abgewandten Seite des Halteelements angeordnet ist, wobei das erste Bügelelement mit einer dem linken Auge des Nutzers zugewandten linken Seite des Steuerungsgehäuses verbunden ist und sich in einen Sichtbereich des linken Auges des Nutzers erstreckt, und wobei das zweite Bügelelement mit einer dem rechten Auge des Nutzers zugewandten rechten Seite des Steuerungsgehäuses verbunden ist und sich in einen Sichtbereich des rechten Auges des Nutzers erstreckt.

Dadurch wird der technische Vorteil erreicht, dass das Steuerungsgehäuse in das Halteelement integriert werden kann und sich eine kompakte Bauweise des Nasenpads ergibt. Zudem stellt das Steuerungsgehäuse eine wirksame Befestigung der Bügelelemente sicher.

Erfindungsgemäß weist das Halteelementeine weitere Nut auf, in welcher ein Vorsprung der Monoscheibe einrasten kann.

Insbesondere weisen handelsübliche Monoscheiben in der Regel einen Vorsprung auf, welcher in das Scheibenaufnahmeelement, insbesondere die zweite Nut, eingreift.

Insbesondere in die weitere Nut in der Nut des Halteelements angeordnet, so dass die Monoscheibe in der Nut des Halteelements aufgenommen ist, und so dass der Vorsprung der Monoscheibe in die weitere Nut des Halteelements einrasten kann.

Dadurch wird der technische Vorteil erreicht, dass eine wirksame Befestigung der Monoscheibe an dem Scheibenaufnahmeelement des Halteelements möglich ist.

In einer Ausführungsform umfasst das lichtprojizierende Nasenpad einen Bewegungssensor, welcher ausgebildet ist, eine Bewegung des Benutzers oder eine Nichtbewegung des Nutzers des lichtprojizierenden Nasenpads zu erfassen, und wobei die Steuerung ausgebildet ist, die LEDs des ersten und zweiten Bügelelements in Abhängigkeit von der erfassten Bewegung zu aktivieren.

Dadurch wird der technische Vorteil erreicht, dass beispielsweise ein Schutz vor einem Sekundenschlaf für einen Autofahrer ermöglicht wird, wenn dieser das Nasenpad trägt.

Beispielsweise kann die Steuerung die LEDs des ersten und/oder zweiten Bügelelements aktivieren, wenn der Bewegungssensor für einen vorbestimmten Zeitraum keine Bewegung des Nutzers, also eine Nichtbewegung des Nutzers erfasst. Beispielsweise kann die Steuerung sowie die LEDs des ersten und/oder zweiten Bügelelements deaktiviert bzw. ausgeschaltet werden, wenn der Bewegungssensor eine Nichtbewegung des Nutzers erfasst.

In einer Ausführungsform umfasst das Licht emittierende Nasenpad einen Magnetometer, welcher ausgebildet ist, die Blickrichtung des Benutzers des Licht emittierenden Nasenpads zu erfassen, und wobei die Steuerung ausgebildet ist, diese als Information entweder selbst zu verarbeiten oder an ein anderes Gerät weiter zu geben.

Dadurch wird der technische Vorteil erreicht, dass beispielsweise bei der Nutzung einer laufenden Navigation die folgende Lauf/Fahrtrichtung in Relation zur Ausrichtung des Nutzers steht.

In einer Ausführungsform umfasst das Licht emittierende Nasenpad einen Lichtsensor, welcher ausgebildet ist, eine Helligkeit eines Umgebungslichts in der Umgebung des Licht emittierenden Nasenpads zu erfassen, und wobei die Steuerung ausgebildet ist, die LEDs des ersten und zweiten Bügelelements in Abhängigkeit von der erfassten Helligkeit zu regeln.

Dadurch wird der technische Vorteil erreicht, dass die Lichtintensität der LEDs an die Umgebungshelligkeit angepasst wird, so dass eine übermäßige Blendung des Nutzers vermieden wird.

In einer Ausführungsform sind die an dem ersten und zweiten Bügelelement angeordneten LEDs an einer dem linken und rechten Auge des Nutzers zugewandten Bügelelementinnenseite des jeweiligen Bügelelements angeordnet, um die Lichtsignale in den Sichtbereich des linken und rechten Auges des Nutzers zu projizieren.

Dadurch wird der technische Vorteil erreicht, dass die LEDs das emittierte Licht direkt in das linke und rechte Auge des Nutzers projizieren/leuchten, so dass eine besonders wirksame Wahrnehmung der Lichtsignale durch den Nutzer gewährleistet wird.

In einer Ausführungsform weist das erste Bügelelement einen ersten winkligen Bügelelementabschnitt auf, welcher sich winklig zu einer Hocherstreckungsrichtung des Licht emittierenden Nasenpads erstreckt, und/oder weist das zweite Bügelelement einen zweiten winkligen Bügelelementabschnitt auf, welcher sich winklig zu der Hocherstreckungsrichtung des Licht emittierenden Nasenpads erstreckt, wobei das erste Bügelelement einen ersten horizontalen Bügelelementabschnitt aufweist, welcher sich quer zu der Hocherstreckungsrichtung des Licht emittierenden Nasenpads erstreckt, und wobei das zweite Bügelelement einen zweiten horizontalen Bügelelementabschnitt aufweist, welcher sich quer zu der Hocherstreckungsrichtung des Licht emittierenden Nasenpads erstreckt.

Dadurch wird der technische Vorteil erreicht, dass durch die unterschiedlichen Erstreckungsrichtungen der jeweiligen Bügelelementabschnitte des jeweiligen Bügelelements, die entsprechenden Bügelelemente nicht mittig durch den Sichtbereich des jeweiligen Auges des Nutzers geführt werden müssen, sondern am Rand des Sichtbereichs des jeweiligen Auges des Nutzers geführt werden können.

Insbesondere erstreckt sich die Hocherstreckungsrichtung des lichtprojizierenden Nasenpads, bei einem auf der Nase des Nutzers angeordneten Nasenpad, von unten nach oben, bzw. orthogonal zu einer das linke und rechte Auge verbindenden Augenachse.

In einer Ausführungsform ist der erste horizontale Bügelelementabschnitt mit dem ersten winkligen Bügelelementabschnitt des ersten Bügelelements verbunden und/oder ist der der zweite horizontale Bügelelementabschnitt des zweiten Bügelelements mit dem zweiten winkligen Bügelelementabschnitt des ersten Bügelelements verbunden, oder ist der erste horizontale Bügelelementabschnitt mit einem an dem Halteelement angeordneten Steuerungsgehäuse des ersten Bügelelements verbunden und/oder ist der zweite horizontale Bügelelementabschnitt mit einem an dem Halteelement angeordneten Energieversorgungsgehäuse des zweiten Bügelelements verbunden.

Dadurch wird der technische Vorteil erreicht, dass der erste winklige Bügelelementabschnitt des ersten Bügelelements oder der zweite winklige Bügelelementabschnitt des zweiten Bügelelements nicht zwangsläufig vorhanden sein müssen, da in diesem Fall der entsprechende horizontale Bügelelementabschnitt des jeweiligen Bügelelements an dem jeweiligen mit dem Halteelement verbundenen Energieversorgungsgehäuse, bzw. Steuerungsgehäuse befestigt ist.

In einer Ausführungsform ist der erste winklige Bügelelementabschnitt des ersten Bügelelements und/oder ist der zweite winklige Bügelelementabschnitt des zweiten Bügelelements mit einem an dem Halteelement angeordneten Steuerungsgehäuse verbunden.

Dadurch wird der technische Vorteil erreicht, dass eine wirksame Befestigung des jeweiligen winkligen Bügelelementabschnitts des jeweiligen Bügelelements an dem an dem Halteelement angeordneten Steuerungsgehäuse ermöglicht wird.

In einer Ausführungsform erstreckt sich der jeweilige zweite winklige Bügelelementabschnitt winklig zu dem jeweiligen ersten horizontalen Bügelelementabschnitt erstreckt, und wobei der Winkel zwischen dem jeweiligen ersten horizontalen Bügelelementabschnitt und dem jeweiligen zweiten winkligen Bügelelementabschnitt insbesondere zwischen 90° und 150°, insbesondere ca. 120° beträgt.

Dadurch wird der technische Vorteil erreicht, dass eine optimale Projektionsmöglichkeit in das linke, bzw. rechte Auge ermöglicht wird.

In einer Ausführungsform sind die LEDs an dem ersten horizontalen Bügelelementabschnitt und/oder an dem zweiten winkligen Bügelelementabschnitt des jeweiligen ersten und/oder zweiten Bügelelements angeordnet.

Dadurch wird der technische Vorteil erreicht, dass unterschiedliche Projektionsmöglichkeiten für den Nutzer bereitgestellt werden können.

In einer Ausführungsform ist das jeweilige Bügelelement, insbesondere der jeweilige horizontale Bügelelementabschnitt des jeweiligen Bügelelements, in einem zentralen Sichtbereich, insbesondere in einem unteren zentralen Sichtbereich, insbesondere bis maximal an die Grenze zwischen dem zentralen Sichtbereich und einem unteren peripheren Sichtbereich des jeweiligen Auges des Nutzers angeordnet.

Dadurch wird der technische Vorteil erreicht, dass durch die Führung des jeweiligen Bügelelements, insbesondere des jeweiligen horizontalen Bügelelementabschnitts des jeweiligen Bügelelements in dem unteren Sichtbereich sicherstellt, dass eine vorteilhafte Wahrnehmung der Lichtsignale der LEDs erreicht wird, und zudem eine Verdeckung des Sichtbereichs des Nutzers durch die Bügelelemente minimiert wird.

In einer Ausführungsform ist die Steuerung ausgebildet, die auf dem jeweiligen Bügelelement nebeneinander angeordneten LEDs zeitlich versetzt zu aktivieren, und richtungsselektive Lichtsignale, insbesondere von links nach rechts und/oder rechts nach links, in den Sichtbereich des jeweiligen Auges zu projizieren.

Dadurch wird der technische Vorteil erreicht, dass eine vorteilhafte Richtungsselektivität der Lichtprojektion erreicht wird. In Bezug auf das erste Bügelelement vor dem linken Auge des Nutzers bedeutet dies, dass sich die Lichtsignale von rechts nach links, also von der Nase des Nutzers weg bewegen. In Bezug auf das zweite Bügelelement vor dem rechten Auge des Nutzers bedeutet dies, dass sich die Lichtsignale von links nach rechts, also von der Nase des Nutzers weg bewegen.

Gemäß zweiten Aspekt der vorliegenden Erfindung wird die genannte Aufgabe gelöst durch ein System umfassend ein Licht emittierendes Nasenpad nach dem ersten Aspekt und ein mobiles Nutzergerät, insbesondere Smart-Phone, Smart-Pad oder Laptop, wobei das mobile Nutzergerät kommunikationstechnisch, insbesondere durch eine drahtlose Kommunikationsverbindung, mit der Steuerung des Licht emittierenden Nasenpads verbunden ist, und wobei das mobile Nutzergerät ausgebildet ist, ansprechend auf eine Eingabe des Nutzers die Steuerung des Licht emittierenden Nasenpads zum Aktivieren der LEDs des ersten und zweiten Bügelelements zu regeln.

Gemäß dritten Aspekt der vorliegenden Erfindung wird die oben genannte Aufgabe gelöst durch eine Brillenanordnung umfassend ein Licht emittierendes Nasenpad nach dem ersten Aspekt und/oder ein System nach dem zweiten Aspekt, sowie eine Monoscheibe, welche mit dem Halteelement des Licht emittierenden Nasenpads verbunden ist, wobei an der Sichtscheibe insbesondere ein erster Ohrenbügel zum Hintergreifen des linken Ohrs des Nutzers und insbesondere ein zweiter Ohrenbügel zum Hintergreifen des rechten Ohrs des Nutzers befestigt sind.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
Figur 1 ein Licht emittierendes Nasenpad gemäß einer ersten Ausführungsform in einer Explosionsdarstellung zeigt,
Figur 2 eine Brillenanordnung umfassend das in Figur 1 gezeigte Licht emittierende Nasenpad zusammen mit einer Monoscheibe im zusammengefügten Zustand zeigt,
Figur 3 ein Licht emittierendes Nasenpad gemäß einer zweiten Ausführungsform in einer Explosionsdarstellung zeigt,
Figur 4 eine Brillenanordnung umfassend das in Figur 3 gezeigte Licht emittierende Nasenpad zusammen mit einer Monoscheibe im zusammengefügten Zustand in einer Vorderansicht durch eine externe Person zeigt, und
Figur 5 eine Brillenanordnung umfassend das in Figur 3 gezeigte Licht emittierende Nasenpad zusammen mit einer Monoscheibe im zusammengefügten Zustand in einer Ansicht aus der Perspektive eines die Brille tragenden Nutzers zeigt.

### Detaillierte Beschreibung der Figuren

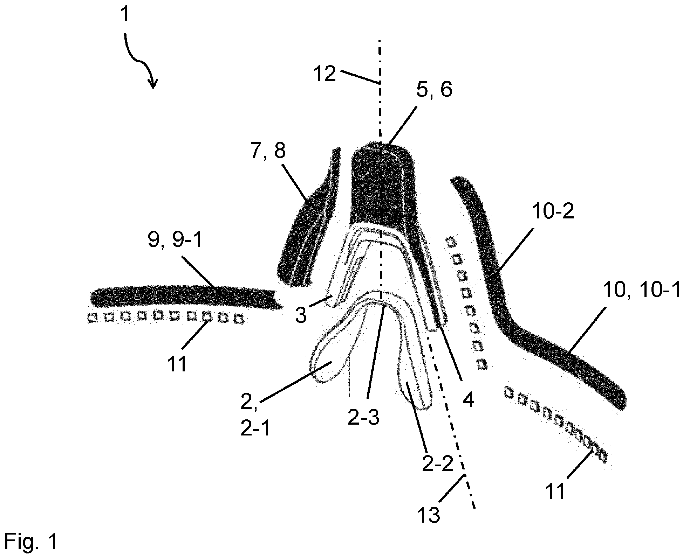

Figur 1 zeigt ein Licht emittierendes Nasenpad gemäß einer ersten Ausführungsform in einer Explosionsdarstellung.

Wie nachfolgend im Detail ausgeführt wird, ist das in der Figur 1 dargestellte Licht emittierende Nasenpad 1 auf eine Nase eines Nutzers aufsetzbar, wodurch durch das Licht emittierende Nasenpad 1 eine Projektion von Licht in die Augen des Nutzers ermöglicht wird.

Das menschliche Auge nimmt über die Stäbchen und Zapfen Lichtreize war, welche an das Gehirn weitergeleitet werden, um eine Unterscheidung zwischen hellen und dunklen Bereichen, bzw. eine Farbwahrnehmung zu ermöglichen. Dadurch, dass das Licht emittierende Nasenpad 1 gemäß der vorliegenden Erfindung entsprechende Lichtsignale direkt in die Augen des Nutzers projiziert, kann eine vorteilhafte Übertragung von visuellen Informationen an den Nutzer stattfinden.

Herkömmliche bekannte Brillen, welche eine Projektion von Licht in die Augen eines Nutzers ermöglichen, verwenden üblicherweise speziell beschichtete Gläser, welche nicht nur aufwendig hergestellt werden müssen, sondern auch mit großem Aufwand an den spezifischen Nutzer angepasst werden müssen. Beispielsweise gibt es für bestehende Head-up-Displays (HUD) keine Möglichkeit unterschiedliche Korrekturgläser zu verwenden.

Das Licht emittierende Nasenpad 1 gemäß der vorliegenden Erfindung hingegen kann mit einer Vielzahl von unterschiedlichen Monoscheiben ausgestattet werden, welche eine flexible Anpassung des Nasenpads 1 nicht nur an die unterschiedlichen Sehstärken von unterschiedlicheren Nutzern ermöglicht, sondern auch in Bezug auf das Material der unterschiedlichen Monoscheiben das Einsatzgebiet des Licht emittierenden Nasenpads 1 signifikant erweitert, so dass dieses nicht nur im Rahmen einer Sportbrille, bzw. Sonnenbrille, sondern auch im Rahmen einer Schutzbrille eingesetzt werden kann.

Das in Figur 1 dargestellte Licht emittierende Nasenpad 1 gemäß der vorliegenden Erfindung ist auf die Nase des Nutzers aufsetzbar und umfasst hierbei ein Padelement 2, welches an der Nase des Nutzers anlegbar ist.

Wenn nachfolgend auf den Begriff "links" oder "rechts", bzw. "oben" oder "unten" verwiesen bezieht sich der Begriff auf die Blickrichtung des Nutzers, wenn der Nutzer ein entsprechendes Licht emittierendes Nasenpad 1 auf der Nase trägt.

Das Padelement 2 weist einen ersten Padelementbereich 2-1 auf, welcher an einen linken Nasenflügel des Nutzers anlegbar ist. Das Padelement 2 weist einen zweiten Padelementbereich 2-2 auf, welcher an einen rechten Nasenflügel des Nutzers anlegbar ist. Das Padelement 2 weist einen Padelementsteg 2-3 auf, welcher den ersten und zweiten Padelementbereich 2-1, 2-2 verbindet. Der Padelementsteg 2-3 ist gegebenenfalls an einem Nasenbein des Nutzers anlegbar.

Das Padelement 2 stellt einen ergonomisch optimierten Sitz des lichtprojizierenden Nasenpad 1 an der Nase des Nutzers sicher.

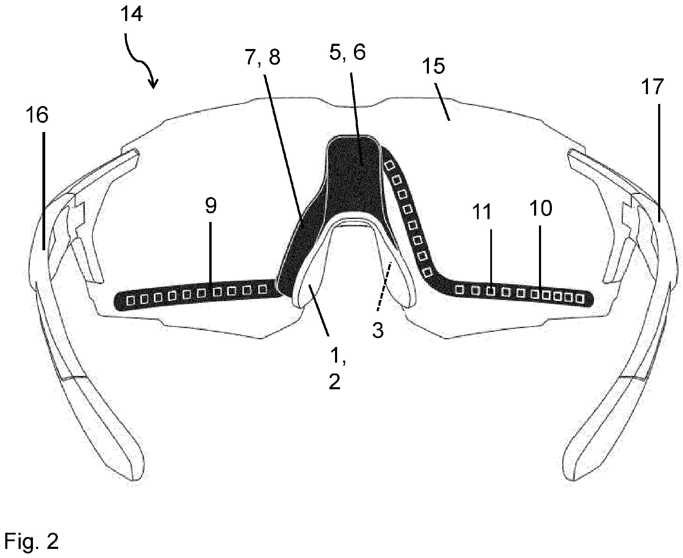

Das Licht emittierende Nasenpad 1 umfasst ferner ein Halteelement 3, welches mit dem Padelement 2 verbunden ist. Das Halteelement 3 ist ausgebildet, eine Mehrzahl von unterschiedlichen Monoscheiben einer Brille, insbesondere einer Sonnen- oder Schutzbrille, zu halten. Eine entsprechende Monoscheibe ist in der Figur 1 nicht dargestellt, dafür aber in der Figur 2.

Auch wenn dies in der Figur 1 nicht dargestellt ist, wird das Halteelement 3 mit dem Padelement 2 über den Padelementsteg 2-3 verbunden, insbesondere auch über den ersten Padelementbereich 2-1 und den zweiten Padelementbereich 2-2. Insbesondere ist das Halteelement 3 lösbar mit dem Padelement 2 verbunden. Beispielsweise ist das Halteelement 3 mit dem Padelementsteg 2-3 des Padelements 2 verschraubt.

Das Halteelement 3 weist zur Befestigung der Monoscheibe ein Scheibenaufnahmeelement 4, erfindungsgemäß eine Nut auf, in welchem die in Figur 1 nicht dargestellte Monoscheibe lösbar aufgenommen ist. Erfindungsgemäß ist die Monoscheibe durch eine in Figur 1 nicht dargestellte Rasteinrichtung mit dem Scheibenaufnahmeelement 4, erfindungsgemäß mit der ersten Nut verbunden. Die erste Nut umläuft hierbei insbesondere eine dem Padelement 2 abgewandte Seite des Halteelements 3.

Erfindungsgemäß weist hierbei das Halteelement 3, insbesondere das Scheibenaufnahmeelement 4 des Halteelements 3, eine weitere, eine zweite Nut auf in welcher ein in Figur 1 nicht dargestellter Vorsprung der Monoscheibe einrasten kann. Hierbei ist die weitere, zweite Nut insbesondere in der ersten Nut angeordnet.

Das Licht emittierende Nasenpad 1 gemäß der vorliegenden Erfindung umfasst ferner eine Steuerung 5, wobei in der Figur 1 nur ein die Steuerung 5 einschließendes Steuerungsgehäuse 6 dargestellt ist.

Wie aus der Figur 1 zu entnehmen ist, ist das Steuerungsgehäuse 6 mit der Steuerung 5 ebenfalls an dem Scheibenaufnahmeelement 4, insbesondere in der Nut angeordnet, so dass auch das Steuerungsgehäuse 6 mit der Steuerung 5 an einer dem Padelement 2 abgewandten Seite des Halteelements 3 angeordnet ist. Insbesondere wird hierbei die erste Nut, mit einer ausreichenden Breite ausgebildet, dass darin sowohl die Monoscheibe als auch das Steuerungsgehäuse 6 aufgenommen werden kann.

Hierbei ist die Monoscheibe an einer dem Nutzer abgewandten Außenseite des Scheibenaufnahmeelements 4, insbesondere in der Nut angeordnet und ist das Steuerungsgehäuse 6 an einer dem Nutzer zugewandten Innenseite des Scheibenaufnahmeelements 4, insbesondere in der Nut angeordnet, überdeckt von außen betrachtet die Monoscheibe das Steuerungsgehäuse 6, so dass das Steuerungsgehäuse 6 bei einer gefärbten Monoscheibe von außen nicht sichtbar ist.

Um die in dem Steuerungsgehäuse 6 angeordnete Steuerung 5 mit elektrischer Energie zu versorgen, umfasst das Licht emittierende Nasenpad 1 gemäß der vorliegenden Erfindung ferner eine elektrische Energieversorgung 7, insbesondere eine elektrische Batterie, welche in einem Energieversorgungsgehäuse 8 aufgenommen ist. Die elektrische Energieversorgung 7, insbesondere elektrische Batterie, ist hierbei mit der Steuerung 5 elektrisch verbunden.

Das Energieversorgungsgehäuse 8 ist insbesondere ebenfalls an einer dem Padelement 2 abgewandten Seite des Halteelements 3 angeordnet, insbesondere an einer dem linken Auge des Nutzers zugewandten linken Seite des Halteelements 3.

Das Energieversorgungsgehäuse 8 und/oder das Steuerungsgehäuse 6 sind insbesondere lösbar mit dem Halteelement 3 verbunden.

Auch wenn dies in Figur 1 nicht dargestellt ist, ist es auch möglich das Energieversorgungsgehäuse 8 und/oder das Steuerungsgehäuse 6 in eine oder mehrere Aufnahmeöffnungen des Halteelements 3 einzuführen, insbesondere lösbar einzuführen.

Das Licht emittierende Nasenpad 1 umfasst ferner ein erstes Bügelelement 9 und ein zweites Bügelelement 10, welche mit dem Halteelement 3 verbunden sind. Sowohl das erste Bügelelement 9 als auch das zweite Bügelelement 10 weist eine Mehrzahl von nebeneinander angeordneten LEDs 11 auf.

Aus der Figur 1 ist ersichtlich, dass sich das erste Bügelelement 9 in einen Sichtbereich des linken Auges des Nutzers erstreckt, und dass sich das zweite Bügelelement 10 in einen Sichtbereich des rechten Auges des Nutzers erstreckt.

Aus der Figur 1 ist ersichtlich, dass das erste Bügelelement 9 mit dem Energieversorgungsgehäuse 8 verbunden ist, welches wiederum mit dem Steuerungsgehäuse 6 verbunden ist, welches wiederum mit dem Halteelement 3 verbunden ist. Alternativ kann das erste Bügelelement 9 direkt mit dem Steuerungsgehäuse 6 verbunden sein oder kann das erste Bügelelement 9 direkt mit dem Halteelement 3 verbunden sein.

Insbesondere weist das erste Bügelelement 9 einen ersten horizontalen Bügelelementabschnitt 9-1 auf, welcher sich quer zu einer Hocherstreckungsrichtung 12 des lichtprojizierenden Nasenpads 1 erstreckt.

Somit erstreckt sich das erste Bügelelement 9 von einer dem linken Auge des Nutzers zugewandten linken Seite das Halteelements 3, bzw. des Steuerungsgehäuses 6 in den Sichtbereich des linken Auges.

Aus der Figur 1 ist ersichtlich, dass das zweite Bügelelement 10 mit dem Steuerungsgehäuse 6 verbunden ist, welches wiederum mit dem Halteelement 3 verbunden ist. Alternativ kann das zweite Bügelelement 10 direkt mit dem Halteelement 3 verbunden sein.

Insbesondere weist das zweite Bügelelement 10 einen zweiten horizontalen Bügelelementabschnitt 10-1 auf, welcher sich quer zu einer Hocherstreckungsrichtung 12 des Licht emittierenden Nasenpads 1 erstreckt, und weist das zweite Bügelelement 10 einen zweiten winkligen Bügelelementabschnitt 10-2 auf, welcher sich winklig zu einer Hocherstreckungsrichtung 12 des Licht emittierenden Nasenpads 1 erstreckt und sich auch winklig zu dem zweiten horizontalen Bügelelementabschnitt 10-1 erstreckt.

Insbesondere erstreckt sich der zweite winklige Bügelelementabschnitt 10-2 entlang einer Paderstreckungsrichtung 13 des jeweiligen ersten Padelementbereichs 2-1, bzw. zweiten Padelementbereichs 2-2 des Padelements 2.

Insbesondere beträgt der Winkel zwischen dem zweiten winkligen Bügelelementabschnitt 10-2 und dem zweiten horizontalen Bügelelementabschnitt 10-1 zwischen 90° und 150°, insbesondere ca. 120°. Insbesondere kann der Übergang des zweiten winkligen Bügelabschnitts 10-2 zu dem jeweiligen zweiten horizontalen Padlelementbereich 10-1 geschwungen und/oder harmonisch ineinander übergehend ausgeführt sein.

Somit erstreckt sich das zweite Bügelelement 10 von einer dem rechten Auge des Nutzers zugewandten rechten Seite des Halteelements 3, bzw. des Steuerungsgehäuses 6 in den Sichtbereich des rechten Auges.

Auch wenn dies in Figur 1 nicht dargestellt ist, kann natürlich das Energieversorgunggehäuse 8 statt an der linken Seite des Halteelements 3 auch an der rechten Seite des Halteelements 3 angeordnet sein. In diesem Fall kann die Geometrie des ersten und zweiten Bügelelements 9 und 10 natürlich gespiegelt werden, d.h. das erste Bügelelement 9 weist neben dem ersten horizontalen Bügelelementabschnitt 9-1 auch noch einen ersten winkligen Bügelelementabschnitt 9-2 auf, und d.h. das zweite Bügelelement 10 weist lediglich den zweiten horizontalen Bügelelementabschnitt 10-1 auf und weist keinen zweiten winkligen Bügelelementabschnitt 10-2 auf.

Auch wenn dies in der Figur 1 aufgrund der Explosionsdarstellung nicht explizit und eindeutig ersichtlich ist, sind die an dem ersten und zweiten Bügelelement 9 und 10 angeordneten LEDs 11 insbesondere an einer dem linken und rechten Auge des Nutzers zugewandten Bügelelementinnenseite des jeweiligen Bügelelements 9 und 10 angeordnet sind, um die Lichtsignale direkt in den Sichtbereich des linken und rechten Auges des Nutzers zu projizieren.

Wie aus der Figur 1 ersichtlich ist, sind die LEDs 11 an dem ersten horizontalen Bügelelementabschnitt 9-1 des ersten Bügelelements 9, sowie an dem zweiten horizontalen Bügelelementabschnitt 10-1 und an dem zweiten winkligen Bügelelementabschnitt 10-2 des zweiten Bügelelements 10 angeordnet.

Die Steuerung 5, welche in dem Steuerungsgehäuse 6 aufgenommen ist, und welche wiederum an dem Halteelement 3 angeordnet ist, ist mit den LEDs 11 des ersten und zweiten Bügelelements 9 und 10 steuerungstechnisch verbunden, so dass die LEDs 11 durch die Steuerung 5 aktiviert und deaktiviert werden aktiviert werden können.

Hierbei ist die Steuerung 5 ausgebildet ist, die LEDs 11 des ersten Bügelelements 9 zu aktivieren, und Lichtsignale in den Sichtbereich des linken Auges des Nutzers zu projizieren und ist die Steuerung 5 ausgebildet, die LEDs 11 des zweiten Bügelelements 10 zu aktivieren, und Lichtsignale in den Sichtbereich des rechten Auges des Nutzers zu projizieren.

Insbesondere sind die LEDs 11 des ersten und zweiten Bügelelements 9, 10 farbige LEDs 11, welche insbesondere zumindest zwei unterschiedliche Farben umfassen, so dass Lichtsignale mit unterschiedlichen Farben in das jeweilige Auge des Nutzers projiziert werden können.

Die mittels der LEDs 11 in das jeweilige Auge des Nutzers übermittelten Lichtsignale können in einer Vielzahl von Anwendungsgebieten eingesetzt werden.

Wird das Nasenpad 1 beispielsweise zusammen mit einer Monoscheibe beim Fahrradfahren oder Autofahren benutzt, kann mit entsprechendem sensorischen Input zu der Steuerung 5 des Nasenpads 1, beispielsweise unter Verwendung eines Radarsensors, der Nutzer auf eine gefährliche Situation, wie ein schnell herannahendes Objekt, wie ein Auto, insbesondere im Toten-Winkel, insbesondere visualisiert im Rahmen einer entsprechenden hellen und Aufmerksamkeits-erregenden Leuchten, hingewiesen werden.

Insbesondere kann das Licht emittierende Nasenpad 1 einen in Figur 1 nicht dargestellten Bewegungssensor umfassen, welcher ausgebildet ist, eine Bewegung des Benutzers oder eine Nichtbewegung des Nutzers des Licht emittierenden Nasenpads 1 zu erfassen, wobei die Steuerung 5 ausgebildet ist, die LEDs 11 des ersten und zweiten Bügelelements 9 und 10 in Abhängigkeit von der erfassten Bewegung zu regeln.

Dadurch wird beispielsweise ein Schutz vor einem sogenannten Sekundenschlaf beim Autofahren bereitgestellt, da bei einer durch den Bewegungssensor erfassten längeren Nichtbewegung des Nutzers durch die Steuerung 5 die LEDs 11 aktiviert werden, um den Nutzer aufzuwecken, insbesondere mit einem entsprechenden hellen und Aufmerksamkeits-erregenden Leuchten wie beispielsweise Rotlicht.

In einer anderen Variante kann das Licht emittierende Nasenpad 1 einen Lichtsensor umfassen, welcher ausgebildet ist, eine Helligkeit des Umgebungslichts in der Umgebung des Licht emittierenden Nasenpads 1 zu erfassen, und wobei die Steuerung 5 ausgebildet ist, die LEDs 11 des ersten und zweiten Bügelelements 9, 10 in Abhängigkeit von der erfassten Helligkeit zu regeln.

Dadurch wird beispielsweise eine an das Umgebungslicht angepasste optimierte Beleuchtungsstärke der LEDs 11 sichergestellt, um den Nutzer nicht übermäßig zu blenden.

Weitere denkbare Anwendungsgebiete des Licht emittierenden Nasenpads 1 umfassen visuelle Warnungen vor einem plötzlichen Luftdruckabfall in einem Reifen bei einer Autofahrt, einen Hinweis auf einen bevorstehenden Gangwechsel bei einem Fahrrad und/oder Auto, und/oder eine Änderung einer Motoransteuerung eines E-bikes.

Beispielweise ist es im Rahmen einer Ambientebeleuchtung auch möglich, eine der Stimmung des Nutzers angepasste Farbe in den Sichtbereich zu projizieren.

Unabhängig davon ist die Steuerung 5 insbesondere ausgebildet ausschließlich die LEDs 11 des ersten Bügelelements 9 zu aktivieren und Lichtsignale in den Sichtbereich des linken Auges des Nutzers zu projizieren, oder ausschließlich die LEDs 11 des zweiten Bügelelements 10 zu aktivieren und Lichtsignale in den Sichtbereich des rechten Auges des Nutzers zu projizieren. Dadurch kann dem Nutzer eine Richtungsselektivität einer drohenden Gefahr vermittelt werden, so dass beispielsweise bei einem sich schnell nähernden Auto aus dem linken Tote-WinkelBereich lediglich die LEDs 11 des ersten Bügelelements 9 aktiviert werden. Insbesondere ist die Steuerung 5 ausgebildet, nur einen Teil der auf dem jeweiligen Bügelelement 9, 10 angeordneten LEDs 11 zu aktivieren, wodurch die Position der Informationen im Sichtbereich des Nutzers angepasst werden kann, wobei dies insbesondere durch eine App eines Smartphones möglich ist, welches durch eine Kommunikationsschnittstelle mit der Steuerung 5 des Nasenpads 1 verbunden ist.

Insbesondere kann die Steuerung 5 ausgebildet sein, die auf dem jeweiligen Bügelelement 9, 10 nebeneinander angeordneten LEDs 11 zeitlich versetzt zu aktivieren, und richtungsselektive Lichtsignale, insbesondere von links nach rechts und/oder von rechts nach links, in den Sichtbereich des jeweiligen Auges zu projizieren. Dadurch kann der Eindruck eines sich von rechts nach links oder von rechts nach links (also von der Nase weg) bewegenden Lichtbereichs dem Nutzer vermittelt werden, beispielsweise um den Nutzer zum Abbiegen zu animieren, bzw. einfache Navigationsanweisungen dem Nutzer zu übermitteln.

Wie bereits erwähnt, ist ein sensorischer Input für die Steuerung 5 des Nasenpads 1 möglich und/oder ist eine Kommunikation einer App eines Smartphones mit der Steuerung 5 des Nasenpads 1 möglich, so dass in diesem Fall das Nasenpad 1 eine mit der Steuerung 5 verbundene Kommunikationsschnittstelle aufweist, über welche eine Kommunikation der Steuerung 5 mit entsprechenden externen Sensoren und/oder an dem Nasenpad 1 angeordneten Sensoren und/oder mit einer externen Steuerung 5 des Smartphones möglich ist.

Beispielsweise kann auch zumindest ein medizinscher Sensor des Nutzers medizinische Werte des Nutzers, wie beispielsweise eine Herzfrequenz, einen Blutdruckwert, und/oder einen Blutzuckerwert, erfassen, und kann die Steuerung 5 des Nasenpads 1 entsprechende kritische Bereiche der sensorisch erfassten medizinische Werte des Nutzers dem Nutzer direkt visuell durch Lichtsignale in die Augen projizieren.

Figur 2 zeigt eine Brillenanordnung umfassend das in Figur 1 gezeigte Licht emittierende Nasenpad zusammen mit einer Monoscheibe im zusammengefügten Zustand.

Für den Gegenstand des Nasenpads 1 der Brillenanordnung 14 wird auf die ausführliche Beschreibung zur Figur 1 verwiesen.

Wie aus der Figur 2 hervorgeht weist die Brillenanordnung 14 eine Monoscheibe 15 auf, welche mit dem Halteelement 3 des Licht emittierenden Nasenpads 1 verbunden ist. Aus darstellungstechnischen Gründen ist das hinter dem Padelement 2 angeordnete Halteelement 3 des Nasenpads 1 nur schematisch dargestellt.

Aus der Darstellung der Figur 2 ist ersichtlich, dass sich das jeweilige erste, bzw. zweite Bügelelement 9 und 10 in einem unteren Bereich der Monoscheibe 15 erstrecken und somit insbesondere auch in einem unteren zentralen Sichtbereich des jeweiligen linken, bzw. rechten Auges des Nutzers angeordnet sind. Dadurch wird der Vorteil erreicht, dass das jeweilige Bügelelement 9 und 10 nicht mittig durch den Sichtbereich des Nutzers verläuft, so dass eine geringe Verdeckung erreicht wird.

Insbesondere sind die entsprechenden Bügelelemente 9 und 10 in dem unteren zentralen Sichtbereich des jeweiligen Auges des Nutzers bis maximal an die Grenze zwischen dem zentralen Sichtbereich und dem unteren periphere Sichtbereich des jeweiligen Auges des Nutzers angeordnet. Somit kann der Nutzer dennoch entsprechende durch die LEDs 11 der Bügelelemente 9 und 10 emittierte Lichtsignale wirksam wahrnehmen.

Wie aus der Figur 2 ferner hervorgeht, sind an der Monoscheibe 15 insbesondere ein erster Ohrenbügel 16 zum Hintergreifen des linken Ohrs des Nutzers und insbesondere ein zweiter Ohrenbügel 17 zum Hintergreifen des rechten Ohrs des Nutzers befestigt. Dadurch wird eine wirksame Stabilisierung der Brillenanordnung 14 an dem Kopf des Nutzers erreicht.

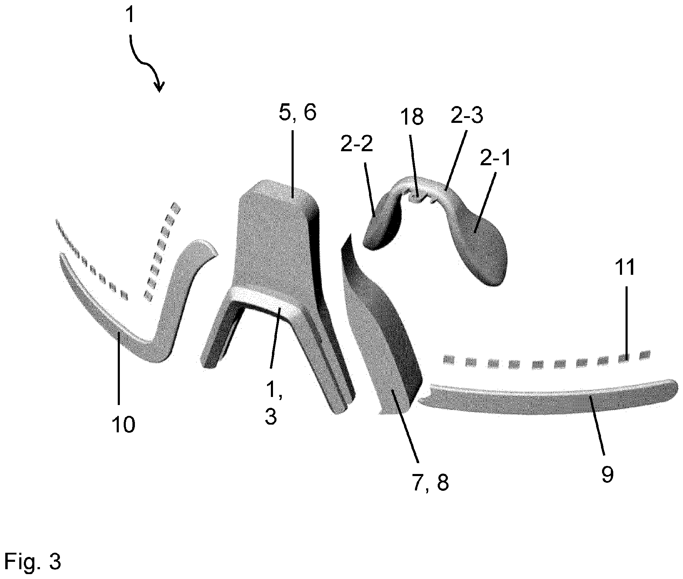

Figur 3 zeigt ein Licht emittierendes Nasenpad gemäß einer zweiten Ausführungsform in einer Explosionsdarstellung.

Das in Figur 3 dargestellte Nasenpad 1 gemäß der zweiten Ausführungsform weist eine hohe Ähnlichkeit zu dem in Figur 1 dargestellten Nasenpad 1 gemäß der ersten Ausführungsform auf, wobei in der zweiten Ausführungsform gemäß der Figur 3 jedoch eine vorderseitige Ansicht gezeigt ist.

Hierbei weist der Padelementsteg 2-3 des Padelements 2 des Nasenpads 1 insbesondere eine Befestigungselementaufnahme 18 auf, durch welche ein Befestigungsmittel insbesondere eine Schraube geführt werden kann, um eine Befestigung des Padelements 2 am Halteelement 3 zu erreichen.

Ansonsten wird auf die vorangehenden Ausführungen zur Figur 1 und Figur 2 verwiesen.

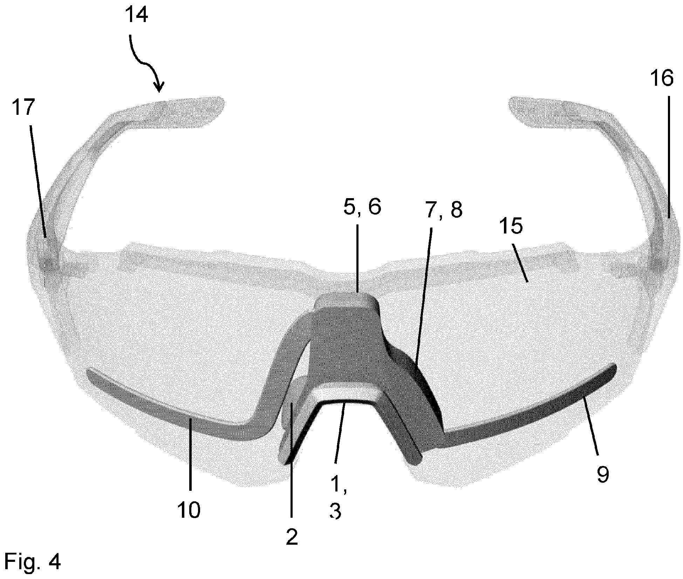

Figur 4 zeigt eine Brillenanordnung umfassend das in Figur 3 gezeigte Licht emittierende Nasenpad zusammen mit einer Monoscheibe im zusammengefügten Zustand in einer rückseitigen Ansicht.

Auch hier wird auf die vorangehenden Ausführungen zur Figur 1 und Figur 2 verwiesen.

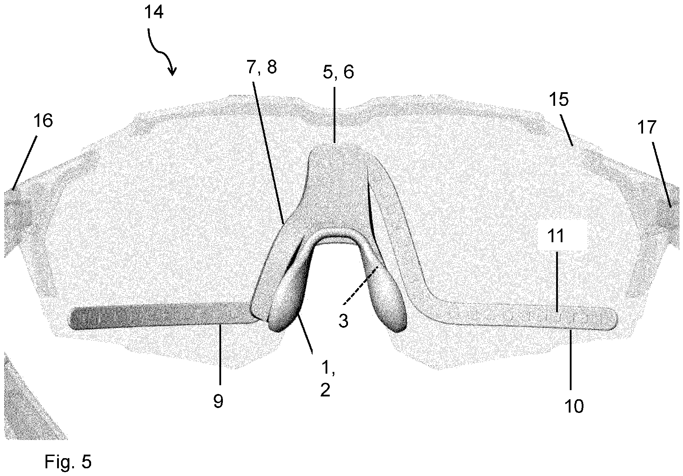

Figur 5 zeigt eine Brillenanordnung umfassend das in Figur 3 gezeigte Licht emittierende Nasenpad zusammen mit einer Monoscheibe im zusammengefügten Zustand in einer vorderseitigen Ansicht.

Auch hier wird auf die vorangehenden Ausführungen zur Figur 1 und Figur 2 verwiesen.

### Bezugszeichen

- 1: Licht emittierende Nasenpad
- 2: Padelement
- 2-1: Erster Padelementbereich
- 2-2: Zweiter Padelementbereich
- 2-3: Padelementsteg
- 3: Halteelement
- 4: Scheibenaufnahmeelement
- 5: Steuerung
- 6: Steuerungsgehäuse
- 7: Elektrische Energieversorgung
- 8: Energieversorgungsgehäuse
- 9: Erstes Bügelelement
- 9-1: Erster horizontaler Bügelelementabschnitt
- 10: Zweites Bügelelement
- 10-1: Zweiter horizontaler Bügelelementabschnitt
- 10-2: Zweiter winkliger Bügelelementabschnitt
- 11: LED
- 12: Hocherstreckungsrichtung des lichtprojizierenden Nasenpads
- 13: Paderstreckungsrichtung des jeweiligen Padelementbereichs des Padelements
- 14: Brillenanordnung
- 15: Monoscheibes
- 16: Erster Ohrenbügel
- 17: Zweiter Ohrenbügel
- 18: Befestigungselementaufnahme

## Patentansprüche

1. Licht emittierendes Nasenpad (1), welches auf eine Nase eines Nutzers aufsetzbar ist, wobei das Licht emittierende Nasenpad (1) umfasst:
ein Padelement (2), welches an der Nase des Nutzers anlegbar ist;
ein Halteelement (3), welches mit dem Padelement (2) verbunden ist, wobei das Halteelement (3) ausgebildet ist, eine Mehrzahl von unterschiedlichen Monoscheiben (15) einer Brille, insbesondere einer Sonnen- oder Schutzbrille, zu halten;
ein erstes Bügelelement (9), welches mit dem Halteelement (3) verbunden ist, wobei das erste Bügelelement (9) eine Mehrzahl von nebeneinander angeordneten LEDs (11) aufweist, und wobei sich das erste Bügelelement (9) in einen Sichtbereich des linken Auges des Nutzers erstreckt;
ein zweites Bügelelement (10), welches mit dem Halteelement (3) verbunden ist, wobei das zweite Bügelelement (10) eine Mehrzahl von nebeneinander angeordneten LEDs (11) aufweist, und wobei sich das zweite Bügelelement (10) in einen Sichtbereich des rechten Auges des Nutzers erstreckt; und
eine Steuerung (5), welche an dem Halteelement (3) angeordnet ist, und welche mit den LEDs (11) des ersten und zweiten Bügelelements (9, 10) steuerungstechnisch verbunden ist;
wobei die Steuerung (5) ausgebildet ist, die LEDs (11) des ersten Bügelelements (9) zu aktivieren, und Lichtsignale in den Sichtbereich des linken Auges des Nutzers zu projizieren und wobei die Steuerung (5) ausgebildet ist, die LEDs (11) des zweiten Bügelelements (10) zu aktivieren, und Lichtsignale in den Sichtbereich des rechten Auges des Nutzers zu projizieren,
**dadurch gekennzeichnet, dass** das Halteelement (3) eine als Scheibenaufnahmeelement (4) ausgebildete Nut aufweist, in welchem die Monoschreibe lösbar aufgenommen werden kann, wobei die Monoscheibe (15) durch eine Rasteinrichtung mit dem Scheibenaufnahmeelement (4) des Halteelements (3) verbunden werden kann, und
dass das Halteelement (3) eine weitere Nut aufweist, in welcher ein Vorsprung der Monoscheibe (15) einrasten kann.

2. Licht emittierendes Nasenpad (1) nach Anspruch 1, wobei die LEDs (11) ausgebildet sind, Licht mit zumindest zwei unterschiedlichen Farben zu emittieren.

3. Licht emittierendes Nasenpad (1) nach Anspruch 1 oder 2, wobei die Steuerung (5) und insbesondere auch eine elektrische Energieversorgung (7) des Licht emittierenden Nasenpads (1) an dem Halteelement (3) lösbar befestigt ist, wobei die Steuerung (5) und insbesondere die elektrische Energieversorgung (7), in eine Aufnahmeöffnung des Halteelements (3) lösbar eingeführt sind.

4. Licht emittierendes Nasenpad (1) nach einem der vorangehenden Ansprüche, wobei das Padelement (2) einen ersten Padelementbereich (2-1) aufweist, welcher an einen linken Nasenflügel eines Nutzers anlegbar ist, wobei das Padelement (2) einen zweiten Padelementbereich (2-2) aufweist, welcher an einen rechten Nasenflügel eines Nutzers anlegbar ist, und wobei das Padelement (2) einen Padelementsteg (2-3) aufweist, welcher den ersten und zweiten Padelementbereich (2-1, 2-2) verbindet, und wobei der Padelementsteg (2-3) an einem Nasenbein des Nutzers anlegbar ist,
wobei das Halteelement (3) durch den Padelementsteg (2-3), insbesondere zusätzlich auch durch den ersten Padelementbereich (2-1) und/oder durch den zweiten Padelementbereich (2-2), mit dem Padelement (2) verbunden ist.

5. Licht emittierendes Nasenpad (1) nach einem der vorangehenden Ansprüche, wobei das Halteelement (3) ein Steuerungsgehäuse (6) der Steuerung (5) aufweist, welches an einer dem Padelement (2) abgewandten Seite des Halteelements (3) angeordnet ist, wobei das erste Bügelelement (9) mit einer dem linken Auge des Nutzers zugewandten linken Seite des Steuerungsgehäuses (6) verbunden ist und sich in einen Sichtbereich des linken Auges des Nutzers erstreckt, und wobei das zweite Bügelelement (10) mit einer dem rechten Auge des Nutzers zugewandten rechten Seite des Steuerungsgehäuses (6) verbunden ist und sich in einen Sichtbereich des rechten Auges des Nutzers erstreckt.

6. Licht emittierendes Nasenpad (1) nach einem der vorangehenden Ansprüche, wobei das Licht emittierende Nasenpad (1) einen Bewegungssensor umfasst, welcher ausgebildet ist, eine Bewegung des Benutzers oder eine Nichtbewegung des Nutzers des Licht emittierenden Nasenpads (1) zu erfassen, und wobei die Steuerung (5) ausgebildet ist, die LEDs (11) des ersten und zweiten Bügelelements (9, 10) in Abhängigkeit von der erfassten Bewegung zu aktivieren oder zu deaktivieren.

7. Licht emittierendes Nasenpad (1) nach einem der vorangehenden Ansprüche, wobei das Licht emittierende Nasenpad (1) einen Lichtsensor umfasst, welcher ausgebildet ist, eine Helligkeit eines Umgebungslichts in der Umgebung des Licht emittierenden Nasenpads (1) zu erfassen, und wobei die Steuerung (5) ausgebildet ist, die LEDs (11) des ersten und zweiten Bügelelements (9, 10) in Abhängigkeit von der erfassten Helligkeit zu regeln.

8. Licht emittierendes Nasenpad (1) nach einem der vorangehenden Ansprüche, wobei das Licht emittierende Nasenpad (1) einen Magnetometer, welcher ausgebildet ist, die Blickrichtung des Benutzers des das Licht emittierende Nasenpad (1) zu erfassen, und wobei die Steuerung ausgebildet ist, diese als Information entweder selbst zu verarbeiten und/oder an ein anderes Gerät weiterzugeben.

9. Licht emittierendes Nasenpad (1) nach einem der vorangehenden Ansprüche, wobei die an dem ersten und zweiten Bügelelement (9, 10) angeordneten LEDs (11) an einer dem linken und rechten Auge des Nutzers zugewandten Bügelelementinnenseite des jeweiligen Bügelelements (9, 10) angeordnet sind, um die Lichtsignale in den Sichtbereich des linken und rechten Auges des Nutzers zu projizieren.

10. Licht emittierendes Nasenpad (1) nach einem der vorangehenden Ansprüche, wobei das erste Bügelelement (9) einen ersten winkligen Bügelelementabschnitt (9-2) aufweist, welcher sich winklig zu einer Hocherstreckungsrichtung (12) des lichtprojizierenden Nasenpads (1) erstreckt, und/oder wobei das zweite Bügelelement (10) einen zweiten winkligen Bügelelementabschnitt (10-2) aufweist, welcher sich winklig zu der Hocherstreckungsrichtung (12) des lichtprojizierenden Nasenpads (1) erstreckt, wobei das erste Bügelelement (9) einen ersten horizontalen Bügelelementabschnitt (9-1) aufweist, welcher sich quer zu der Hocherstreckungsrichtung (12) des lichtprojizierenden Nasenpads (1) erstreckt, und wobei das zweite Bügelelement (10) einen zweiten horizontalen Bügelelementabschnitt (10-2) aufweist, welcher sich quer zu der Hocherstreckungsrichtung (12) des lichtprojizierenden Nasenpads (1) erstreckt.

11. Licht emittierendes Nasenpad (1) nach Anspruch 10, wobei der erste horizontale Bügelelementabschnitt (9-1) mit dem ersten winkligen Bügelelementabschnitt (9-2) des ersten Bügelelements verbunden (9) ist und/oder wobei der zweite horizontale Bügelelementabschnitt (10-1) des zweiten Bügelelements (10) mit dem zweiten winkligen Bügelelementabschnitt (10-2) des zweiten Bügelelements (10) verbunden ist; oder
wobei der erste horizontale Bügelelementabschnitt (9-1) des ersten Bügelelements (9) mit einem an dem Halteelement (3) angeordneten Energieversorgungsgehäuse (8) und/oder dem Steuerungsgehäuse (6) und/oder direkt an dem Halteelement (3) verbunden ist, und/oder wobei der zweite horizontale Bügelelementabschnitt (10-1) des zweiten Bügelelements (10) mit einem an dem Halteelement (3) angeordneten Steuerungsgehäuse (6) und/oder direkt an dem Halteelement (3) und/oder an dem Halteelement (3) angeordneten Energieversorgungsgehäuse (8) verbunden ist.

12. Licht emittierendes Nasenpad (1) nach Anspruch 10, wobei der erste winklige Bügelelementabschnitt (9-2) des ersten Bügelelements (9) und/oder der zweite winklige Bügelelementabschnitt (10-2) des zweiten Bügelelements (10) mit einem an dem Halteelement (3) angeordneten Steuerungsgehäuse (6) verbunden ist.

13. Licht emittierendes Nasenpad (1) nach Anspruch 10 oder 11, wobei sich der jeweilige winklige Bügelelementabschnitt (9-2, 10-2) winklig zu dem jeweiligen horizontalen Bügelelementabschnitt (9-1, 10-1) erstreckt, und wobei der Winkel zwischen dem jeweiligen horizontalen Bügelelementabschnitt (9-1, 10-1) und dem jeweiligen winkligen Bügelelementabschnitt (9-2, 10-2) insbesondere zwischen 90° und 150° beträgt.

14. Licht emittierendes Nasenpad (1) nach Anspruch 10, 11, oder 12, wobei die LEDs (11) an dem ersten horizontalen Bügelelementabschnitt (9-1, 10-,1) und/oder an dem zweiten winkligen Bügelelementabschnitt (9-2, 10-2) des jeweiligen ersten und zweiten Bügelelements (9, 10) angeordnet sind.

15. Licht emittierendes Nasenpad (1) nach einem der vorangehenden Ansprüche, wobei das jeweilige Bügelelement (9, 10), insbesondere der jeweilige horizontale Bügelelementabschnitt (9-1, 10-1) des jeweiligen Bügelelements (9, 10), in einem zentralen Sichtbereich, insbesondere in einem unteren zentralen Sichtbereich, insbesondere bis maximal an die Grenze zwischen dem zentralen Sichtbereich und einem unteren peripheren Sichtbereich des jeweiligen Auges des Nutzers angeordnet ist.

16. Licht emittierendes Nasenpad (1) nach einem der vorangehenden Ansprüche, wobei die Steuerung (5) ausgebildet ist, die auf dem jeweiligen Bügelelement (9, 10) nebeneinander angeordneten LEDs (11) zeitlich versetzt zu aktivieren, und richtungsselektive Lichtsignale, insbesondere von links nach rechts und/oder von rechts nach links, in den Sichtbereich des jeweiligen Auges zu projizieren.

17. System umfassend ein Licht emittierendes Nasenpad (1) nach einem der vorangehenden Ansprüche und ein mobiles Nutzergerät, insbesondere Smart-Phone, Smart-Pad oder Laptop,
wobei das mobile Nutzergerät kommunikationstechnisch, insbesondere durch eine drahtlose Kommunikationsverbindung, mit der Steuerung (5) des Licht emittierenden Nasenpads (1) verbunden ist, und wobei das mobile Nutzergerät ausgebildet ist, ansprechend auf eine Eingabe des Nutzers die Steuerung (5) des Licht emittierenden Nasenpads (1) zum Aktivieren der LEDs (11) des ersten und zweiten Bügelelements (9, 10) zu regeln.

18. Brillenanordnung (14) umfassend ein Licht emittierendes Nasenpad (1) nach einem der vorangehenden Ansprüche 1 bis 16 und/oder ein System nach dem Anspruch 17, sowie eine Monoscheibe (15), welche mit dem Halteelement (3) des Licht emittierenden Nasenpads (1) verbunden ist,
wobei an der Sichtschreibe insbesondere ein erster Ohrenbügel (16) zum Hintergreifen des linken Ohrs des Nutzers und insbesondere ein zweiter Ohrenbügel (17) zum Hintergreifen des rechten Ohrs des Nutzers befestigt sind.

## Claims

1. A light-emitting nose pad (1) which can be placed on a user's nose, wherein the light-emitting nose pad (1) includes:
a pad element (2) which can be placed on the nose of the user;
a support element (3) connected to the pad element (2), wherein the support element (3) is configured to support a selection of different monolenses (15) of eyewear, in particular of sunglasses or safety glasses;
a first rail element (9) connected to the support element (3), wherein the first rail element (9) includes a plurality of LEDs (11) arranged next to one another, and wherein the first rail element (9) extends into the field of view of the left eye of the user;
a second rail element (10) connected to the support element (3), wherein the second rail element (10) includes a plurality of LEDs (11) arranged next to one another, and wherein the second rail element (10) extends into the field of view of the right eye of the user; and
a controller (5) arranged on the support element (3) and connected to the LEDs (11) of the first and second rail elements (9, 10) in a manner that enables the control of the LEDs (11);
wherein the controller (5) is configured to activate the LEDs (11) of the first rail element (9) and to project light signals into the field of view of the left eye of the user, and wherein the controller (5) is configured to activate the LEDs (11) of the second rail element (10), and to project light signals into the field of view of the right eye of the user,
**characterized in that** the support element (3) includes a groove configured as a lens-receiving element (4), in which the monolens can be received in a detachable manner, wherein the monolens (15) can be connected to the lens-receiving element (4) of the support element (3) by means of a snap-in mechanism, and **in that** the support element (3) includes a further groove in which a projection of the monolens (15) can snap in.

2. A light-emitting nose pad (1) according to claim 1, wherein the LEDs (11) are configured to emit light of at least two different colours.

3. A light-emitting nose pad (1) according to claim 1 or 2, wherein the controller (5) and in particular an electrical power supply (7) for the light-emitting nose pad (1) are fastened in a detachable manner to the support element (3), wherein the controller (5) and in particular the electrical power supply (7) are inserted in a detachable manner into a receiving opening in the support element (3).

4. A light-emitting nose pad (1) according to one of the preceding claims, wherein the pad element (2) includes a first pad-element area (2-1) that can be placed against a left flank of the user's nose, wherein the pad element (2) includes a second pad-element area (2-2) that can be placed against a right flank of the user's nose, and wherein the pad element (2) includes a pad-element bridge (2-3) that connects the first and second pad-element areas (2-1, 2-2), and wherein the pad-element bridge (2-3) can be placed on the bridge of the user's nose,
wherein the support element (3) is connected to the pad element (2) by the pad-element bridge (2-3), in particular additionally by the first pad-element area (2-1) and/or by the second pad-element area (2-2).

5. A light-emitting nose pad (1) according to one of the preceding claims, wherein the support element (3) includes a controller housing (6) of the controller (5), which controller housing (6) is arranged on a side of the support element (3) that faces away from the pad element (2), wherein the first rail element (9) is connected to a left side of the controller housing (6) that faces the left eye of the user and that extends into the field of view of the user's left eye, and wherein the second rail element (10) is connected to a right side of the controller housing (6) that faces the right eye of the user and that extends into the field of view of the user's right eye.

6. A light-emitting nose pad (1) according to one of the preceding claims, wherein the light-emitting nose pad (1) includes a motion sensor that is configured to detect a movement or an absence of movement of the user of the light-emitting nose pad (1), and wherein the controller (5) is configured to activate or deactivate the LEDs (11) of the first and second rail elements (9, 10) as a function of the detected movement.

7. A light-emitting nose pad (1) according to one of the preceding claims, wherein the light-emitting nose pad (1) includes a light sensor that is configured to detect a brightness of ambient light in the vicinity of the light-emitting nose pad (1), and wherein the controller (5) is configured to regulate the LEDs (11) of the first and second rail elements (9, 10) as a function of the detected brightness.

8. A light-emitting nose pad (1) according to one of the preceding claims, wherein the light-emitting nose pad (1) includes a magnetometer that is configured to detect the direction in which the user of the light-emitting nose pad is looking, and wherein the controller is configured either to process this information itself and/or to transmit it to another device.

9. A light-emitting nose pad (1) according to one of the preceding claims, wherein the LEDs (11) arranged on the first and second rail elements (9, 10) are arranged on a rail-element inner surface of the respective rail element facing the left and right eyes (9, 10) of the user in order to project the light signals into the field of view of the left and right eyes of the user.

10. A light-emitting nose pad (1) according to one of the preceding claims, wherein the first rail element (9) includes a first angled rail-element section (9-2) which extends at an angle to a direction of vertical extension (12) of the light-projecting nose pad (1), and/or wherein the second rail element (10) includes a second angled rail element section (10-2) which extends at an angle to the direction of vertical extension (12) of the light-projecting nose pad (1), wherein the first rail element (9) includes a first horizontal rail-element section (9-1) which extends transversely to the direction of vertical extension (12) of the light-projecting nose pad (1), and wherein the second rail element (10) includes a second horizontal rail-element section (10-2) which extends transversely to the direction of vertical extension (12) of the light-projecting nose pad (1).

11. A light-emitting nose pad (1) according to claim 10,
wherein the first horizontal rail-element section (9-1) is connected to the first angled rail-element section (9-2) of the first rail element (9) and/or
wherein the second horizontal rail-element section (10-1) of the second rail element (10) is connected to the second angled rail-element section (10-2) of the second rail element (10); or
wherein the first horizontal rail-element section (9-1) of the first rail element (9) is connected to a power supply housing (8) and/or to the controller housing (6) arranged on the support element (3) and/or directly to the support element (3) and/or
wherein the second horizontal rail-element section (10-1) of the second rail element (10) is connected to a controller housing (6) arranged on the support element (3) and/or directly to the support element (3) and/or to a power supply housing (8) arranged on the support element (3).

12. A light-emitting nose pad (1) according to claim 10, wherein the first angled rail-element section (9-2) of the first rail element (9) and/or the second angled rail-element section (10-2) of the second rail element (10) is connected to a controller housing (6) arranged on the support element (3).

13. A light-emitting nose pad (1) according to claim 10 or 11, wherein the respective angled rail-element section (9-2, 10-2) extends at an angle to the respective horizontal rail-element section (9-1, 10-1), and wherein the angle between the respective horizontal rail-element section (9-1, 10-1) and the respective angled rail-element section (9-2, 10-2) lies in particular between 90° and 150°.

14. A light-emitting nose pad (1) according to claim 10, 11 or 12, wherein the LEDs (11) are arranged on the first horizontal rail-element section (9-1, 10-1) and/or on the second angled rail-element section (9-2, 10-2) of the respective first and second rail elements (9, 10).

15. A light-emitting nose pad (1) according to one of the preceding claims, wherein the respective rail element (9, 10), in particular the respective horizontal rail-element section (9-1, 10-1) of the respective rail element (9, 10), is arranged in a central field of view, in particular in a lower central field of view, in particular at most at the boundary between the central field of view and a lower peripheral field of view of the respective eye of the user.

16. A light-emitting nose pad (1) according to one of the preceding claims, wherein the controller (5) is configured to activate the LEDs (11) arranged next to one another on the respective rail element (9, 10) in a temporally staggered manner, and to project directional light signals, in particular from left to right and/or from right to left, into the field of view of the respective eye.

17. A system including a light-emitting nose pad (1) according to one of the preceding claims and a mobile user device, in particular a smartphone, tablet or laptop,
wherein the mobile user device is connected via a communication link, in particular by a wireless communication link, to the controller (5) of the light-emitting nose pad (1), and wherein the mobile user device is configured to control the controller (5) of the light-emitting nose pad (1), in response to user input, to activate the LEDs (11) of the first and second rail elements (9, 10).

18. An eyewear assembly (14) including a light-emitting nose pad (1) according to one of the preceding claims 1 to 16 and/or a system according to claim 17, as well as a monolens (15) connected to the support element (3) of the light-emitting nose pad (1),
wherein in particular a first arm (16) designed to wrap round the left ear of the user and in particular a second arm (17) designed to wrap round the right ear of the user are attached to the lens.

## Revendications

1. Plaquette nasale émettant de la lumière (1), qui peut être placée sur le nez d'un utilisateur, dans laquelle la plaquette nasale émettant de la lumière (1) comprenant :
un élément de support (2), qui peut être placé sur le nez de l'utilisateur ;
un élément de maintien (3), qui est relié à l'élément de support (2), dans laquelle l'élément de maintien (3) est conçu pour maintenir une pluralité de monovisières (15) de lunettes différentes, notamment de lunettes de soleil ou de protection ;
une première branche (9), qui est reliée à l'élément de maintien (3), dans laquelle la première branche (9) présente une pluralité de LEDs (11) disposées côte à côte et dans laquelle la première branche (9) s'étend dans le champ de vision de l'œil gauche de l'utilisateur ;
une deuxième branche (10), qui est reliée à l'élément de maintien (3), dans laquelle la deuxième branche (10) présente une pluralité de LEDs (11) disposées côté à côté et dans laquelle la deuxième branche (10) s'étend dans le champ de vision de l'œil droit de l'utilisateur ; et
une unité de commande (5), qui est disposée sur l'élément de maintien (3) et qui est reliée aux LEDs (11) des première et deuxième branches (9, 10) à des fins de commande ;
dans laquelle l'unité de commande (5) est configurée pour activer les LEDs (11) de la première branche (9) et projeter des signaux lumineux dans le champ de vision de l'œil gauche de l'utilisateur, et dans laquelle l'unité de commande (5) est configurée pour activer les LEDs (11) de la deuxième branche (10) et projeter des signaux lumineux dans le champ de vision de l'œil droit de l'utilisateur,
**caractérisée en ce que** l'élément de maintien (3) présente une rainure configurée comme un élément de réception de visière (4), dans lequel la monovisière peut être insérée de manière amovible, dans lequel la monovisière (15) peut être reliée par un dispositif de verrouillage à l'élément de réception de visière (4) de l'élément de maintien (3) et **en ce que** l'élément de maintien (3) présente une rainure supplémentaire, dans laquelle une protubérance du monovisière (15) peut s'engager.

2. Plaquette nasale émettant de la lumière (1) selon la revendication 1, dans laquelle les LEDs (11) sont configurées pour émettre de la lumière d'au moins deux couleurs différentes.

3. Plaquette nasale émettant de la lumière (1) selon la revendication 1 ou 2, dans laquelle l'unité de commande (5) et, en particulier, une alimentation électrique (7) de la plaquette nasale émettant de la lumière (1) sont fixées de manière amovible à l'élément de fixation (3), dans laquelle l'unité de commande (5) et, en particulier, l'alimentation électrique (7) sont insérées de manière amovible dans une ouverture de réception de l'élément de fixation (3).

4. Plaquette nasale émettant de la lumière (1) selon une des revendications précédentes, dans laquelle l'élément de plaquette (2) présente une première zone d'élément de plaquette (2-1), qui peut être placée contre une narine gauche de l'utilisateur, dans laquelle l'élément de plaquette (2) présente une deuxième zone d'élément de plaquette (2-2), qui peut être placée contre une narine droite de l'utilisateur et dans laquelle l'élément de plaquette (2) présente également une liaison d'élément de plaquette (2-3), qui relie la première et la deuxième zones d'élément de plaquette (2-1, 2-2) et dans laquelle la liaison d'élément de plaquette (2-3) peut être placée contre un os nasal de l'utilisateur,
dans laquelle l'élément de maintien (3) est relié à l'élément de plaquette (2) par la liaison d'élément de plaquette (2-3), et notamment également par la première zone d'élément de plaquette (2-1) et/ou la deuxième zone d'élément de plaquette (2-2).

5. Plaquette nasale émettant de la lumière (1) selon une des revendications précédentes, dans laquelle l'élément de maintien (3) comprend un boîtier de commande (6) de l'unité de commande (5), qui est disposé sur le côté de l'élément de maintien (3) opposé à l'élément de plaquette (2), dans laquelle la première branche (9) est fixée au côté gauche du boîtier de commande (6), face à l'œil gauche de l'utilisateur et s'étend dans un champ de vision de l'œil gauche de l'utilisateur et dans laquelle la deuxième branche (10) est fixée au côté droit du boîtier de commande (6), face à l'œil droit de l'utilisateur, et s'étend dans un champ de vision de l'œil droit de l'utilisateur.

6. Plaquette nasale émettant de la lumière (1) selon une des revendications précédentes, dans laquelle la plaquette nasale émettant de la lumière (1) comprend un capteur de mouvement, qui est configuré pour détecter un mouvement ou une absence de mouvement de l'utilisateur par rapport à la plaquette nasale émettant de la lumière (1) et en ce que l'unité de commande (5) est configurée pour activer ou désactiver les LEDs (11) de la première et deuxième branche (9, 10) en fonction du mouvement détecté.

7. Plaquette nasale émettant de la lumière (1) selon une des revendications précédentes, dans laquelle la plaquette nasale émettant de la lumière (1) comprend un capteur de lumière, qui est configuré pour détecter une luminosité de la lumière ambiante à proximité de la plaquette nasale émettant de la lumière (1) et dans laquelle l'unité de commande (5) est configurée pour régler les LEDs (11) de la première et deuxième branche (9, 10) en fonction de la luminosité détectée.

8. Plaquette nasale émettant de la lumière (1) selon une des revendications précédentes, dans laquelle la plaquette nasale émettant de la lumière (1) comprend un magnétomètre, qui est configuré pour détecter la direction du regard de l'utilisateur de la plaquette nasale émettant de la lumière (1) et dans laquelle l'unité de commande est configurée pour traiter elle-même cette information et/ou la transmettre à un autre appareil.

9. Plaquette nasale émettant de la lumière (1) selon une des revendications précédentes, dans laquelle les LEDs (11) disposées sur la première et deuxième branche (9, 10) sont disposées sur la surface interne de branche respective (9, 10) faisant face aux yeux gauche et droit de l'utilisateur, afin de projeter les signaux lumineux dans le champ de vision des yeux gauche et droit de l'utilisateur.

10. Plaquette nasale émettant de la lumière (1) selon une des revendications précédentes, dans laquelle la première branche (9) présente une première section angulaire de branche (9-2), qui s'étend en formant un angle avec une direction d'extension verticale (12) de la plaquette nasale émettant de la lumière (1) et/ou dans laquelle la deuxième branche (10) présente une deuxième section angulaire de branche (10-2), qui s'étend en formant un angle avec une direction d'extension verticale (12) de la plaquette nasale émettant de la lumière (1), dans laquelle la première branche (9) présente une première section horizontale de branche (9-1), qui s'étend transversalement à la direction d'extension verticale (12) de la plaquette nasale émettant de la lumière (1) et dans laquelle le deuxième branche (10) présente une deuxième section horizontale de branche (10-2) qui s'étend transversalement à la direction d'extension verticale (12) de la plaquette nasale émettant de la lumière (1).

11. Plaquette nasale émettant de la lumière (1) selon la revendication 10, dans laquelle la première section horizontale de branche (9-1) est reliée à la première section angulaire de branche (9-2) de la première branche (9) et/ou
dans laquelle la deuxième section horizontale de branche (10-1) de la deuxième branche (10) est reliée à la deuxième section angulaire de branche (10-2) de la deuxième branche (10) ; ou
dans laquelle la première section horizontale de branche (9-1) de la première branche (9) est reliée à un boîtier d'alimentation (8) disposé sur l'élément de maintien (3) et/ou au boîtier de commande (6) et/ou directement à l'élément de maintien (3) et/ou
dans laquelle la deuxième section horizontale de branche (10-1) de la deuxième branche (10) est reliée à un boîtier de commande (6) disposé sur l'élément de maintien (3) et/ou directement à l'élément de maintien (3) et/ou à un boîtier d'alimentation (8) disposé sur l'élément de maintien (3).

12. Plaquette nasale émettant de la lumière (1) selon la revendication 10, dans laquelle la première section angulaire de branche (9-2) de la première branche (9) et/ou la deuxième section angulaire de branche (10-2) de la deuxième branche (10) est reliée à un boîtier de commande (6) disposé sur l'élément de maintien (3).

13. Plaquette nasale émettant de la lumière (1) selon la revendication 10 ou 11, dans laquelle la section angulaire de branche respective (9-2, 10-2) s'étend en formant un angle avec la section de branche horizontale respective (9-1, 10-1) et dans laquelle l'angle entre la section de branche horizontale respective (9-1, 10-1) et la section angulaire de branche respective (9-2, 10-2) est notamment compris entre 90° et 150°.

14. Plaquette nasale émettant de la lumière (1) selon la revendication 10, 11 ou 12, dans laquelle les LEDs (11) sont disposées sur la première section horizontale de branche (9-1, 10-1) et/ou sur la deuxième section angulaire de branche (9-2, 10-2) de la première et deuxième branche (9, 10) respectives.

15. Plaquette nasale émettant de la lumière (1) selon une des revendications précédentes, dans laquelle la branche respective (9, 10), en particulier la section horizontale de branche (9-1, 10-1) respective de la branche respective (9, 10), est disposée dans un champ de vision central, en particulier dans un champ de vision central inférieur, notamment jusqu'à la limite entre le champ de vision central et un champ de vision périphérique inférieur de l'œil respectif de l'utilisateur.

16. Plaquette nasale émettant de la lumière (1) selon une des revendications précédentes, dans laquelle l'unité de commande (5) est configurée pour activer les LEDs (11) disposées côte à côte sur la branche respective (9, 10) avec un décalage temporel et pour projeter des signaux lumineux directionnels, notamment de gauche à droite et/ou de droite à gauche, dans le champ de vision de l'œil correspondant.

17. Système comprenant une plaquette nasale émettant de la lumière (1) selon une des revendications précédentes et un appareil mobile, notamment un smartphone, une tablette ou un ordinateur portable, dans lequel l'appareil mobile est connecté à l'unité de commande (5) de la plaquette nasale émettant de la lumière (1) par une technologie de communication, notamment par une connexion sans fil et dans lequel l'appareil mobile est configuré pour commander l'unité de commande (5) de la plaquette nasale émettant de la lumière (1) en réponse à une action de l'utilisateur afin d'activer les LEDs (11) de la première et deuxième branche (9, 10).

18. Dispositif de lunettes (14) comprenant une plaquette nasale émettant de la lumière (1) selon une des revendications précédentes 1 à 16 et/ou un système selon la revendication 17 ainsi qu'une monovisière (15), qui est reliée à l'élément de maintien (3) de la plaquette nasale émettant de la lumière (1),
dans lequel, en particulier, une première branche de lunette (16) pour passer derrière l'oreille gauche de l'utilisateur et, en particulier, une deuxième branche de lunette (17) pour passer derrière l'oreille droite de l'utilisateur sont fixés à la visière.
